# Europäisches Patentamt
# European Patent Office
# Office européen des brevets

(19)

(11) Veröffentlichungsnummer: **0 250 625**
B1

(12)

# EUROPÄISCHE PATENTSCHRIFT

(45) Veröffentlichungstag der Patentschrift:
16.05.90

(21) Anmeldenummer: 86108846.6

(22) Anmeldetag: 28.06.86

(51) Int. Cl.⁵: **G01D 5/20**, G01L 1/14, G01R 19/00

(54) Elektromagnetische Anordnung mit einem durch eine mechanische Bewegung beeinflussbaren Magnetfeld.

(43) Veröffentlichungstag der Anmeldung:
07.01.88 Patentblatt 88/1

(45) Bekanntmachung des Hinweises auf die Patenterteilung:
16.05.90 Patentblatt 90/20

(84) Benannte Vertragsstaaten:
AT CH DE FR GB LI SE

(56) Entgegenhaltungen:
DE-A- 2 211 359
DE-A- 3 218 913
DE-B- 1 108 449
US-A- 3 731 184

(73) Patentinhaber: VACUUMSCHMELZE GMBH, Grüner Weg 37 Postfach 2253, D-6450 Hanau 1(DE)

(72) Erfinder: Radeloff, Christian, Dr., Fritz-Schubert-Ring 36, D-6454 Bruchköbel 1(DE)
Erfinder: Rauscher, Gerd, Drosselweg 8, D-8755 Alzenau(DE)

ACTORUM AG

## Beschreibung

Die Erfindung betrifft eine elektromagnetische Anordnung mit einem durch eine mechanische Bewegung beeinflußbaren und von einem Magnetfeldsensor erfaßbaren Magnetfeld sowie einer Spule mit elektrisch leitenden Windungen.

Eine derartige Anordnung ist als elektromagnetischer Wegsensor aus der europäischen Patentanmeldung 80 055 A 2 bekannt geworden. Hier wird durch Dauermagnete ein Magnetfeld erzeugt, welches durch die Bewegung eines sich mit einer Welle drehbaren, magnetisch leitende Zähne aufweisenden Zahnrades je nach Drehbewegung der Welle verändert. Diese Änderung des Magnetfeldes wird von einer Spule mit elektrisch leitenden Windungen erfaßt, indem in dieser Spule entsprechend der Änderung des Magnetfeldes Wechselspannungen induziert werden. Eine Auswerteschaltung gestattet es, aus der induzierten Spannung Drehrichtung und Drehgeschwindigkeit der Welle zu ermitteln.

Viele andere bekannte elektromagnetische Anordnungen dieser Art dienen beispielsweise als Stromsensoren, wo ein von einem elektrischen Strom erzeugtes Magnetfeld gemessen wird, oder als Grenzwertgeber, wo das Erreichen eines vorgegebenen Grenzwertes bei einem elektrischen Strom dadurch erkannt wird, daß ein bestimmter Wert eines Magnetfeldes über- bzw. unterschritten wird.

In der DE-A 2 211 359 ist beispielsweise ein Verfahren zur elektrischen Erfassung mechanischer Größen beschrieben, bei der die elektrische Induktivitätsänderung bei der elastischen Verformung einer Feder verwendet wird um mechanische Größen, wie zum Beispiel Weg, Druck, Zug, Gewicht, Länge oder Drehung zu erfassen. Hierbei wird allerdings nicht das sich ändernde Magnetfeld einer derartigen zusammendrückbaren Feder ausgewertet. Vielmehr ist die Feder selbst in einen nicht näher beschriebenen Steuerstromkreis einzuschalten, der über die Messung der Induktivität der Feder die Meßgröße bildet.

Auch die erfindungsgemäße elektromagnetische Anordnung kann sowohl als Sensor für eine mechanische Bewegung, als auch als Sensor zur Bestimmung einer mechanischen Kraft ausgebildet werden; abgeleitet davon können Gewichte bestimmt werden oder es kann die Beschleunigung eines Körpers gemessen werden, indem die auf einen federnd aufgehängten Körper einwirkende Kraft bestimmt wird. Weiterhin bestehen Einsatzmöglichkeiten als Endschalter dort, wo das Ende einer Bewegung durch Kontakt des bewegten Körpers oder eines an dem Körper befindlichen Anschlages mit einer Feder erfolgt. Weiterhin kann die Anordnung nach der Erfindung auch als Winkelgeber eingesetzt werden, wenn es sich bei der erfaßbaren Bewegung um eine Dreh- bzw. Schwenkbewegung handelt.

Verwendet man die vorliegende elektromagnetische Anordnung als Strommeßgerät oder als Strommeßwertgeber, so kann durch einfache lineare Bewegung eines Anschlages eine Justierung des Stromgrenzwertes oder eine Eichung der Meßparameter erfolgen. In Verbindung mit einem Impulsdraht als Magnetfeldsensor lassen sich auch Gleichströme messen bzw. es läßt sich bei Überschreitung eines Stromwertes oder eines bestimmten mechanischen Wegpunktes ein Spannungsimpuls erzeugen.

Alle diese Möglichkeiten ergeben sich, wenn man die eingangs genannte elektromagnetische Anordnung so ausbildet, daß mindestens ein Teil der Windungen der Spule als Federspule mit elastisch verformbaren und elektrisch leitenden Windungen ausgebildet ist, daß die Federspule an eine Gleich- oder Wechselstromquelle zur Erzeugung des Magnetfeldes angeschlossen ist, daß der Magnetfeldsensor innerhalb des durch den Strom in der Federspule erzeugten Magnetfeldes angeordnet ist und daß ein bewegbares Teil so mit der Federspule zusammenwirkt, daß dessen Bewegung eine Verformung der Federspule bewirkt.

Vorteilhafte Weiterbildungen dieser erfindungsgemäßen Lösung sind in den abhängigen Ansprüchen beschrieben.

Die Erfindung macht sich die in der Physik bekannte Tatsache zunutze, daß die durch eine stromdurchflossene Spule erzeugte magnetische Feldstärke einerseits dem Strom und andererseits der Anzahl der Windungen pro Längeneinheit der Spule proportional ist. Es gilt näherungsweise die Formel

$$H = \frac{w \cdot i}{l},$$

wobei mit H die magnetische Feldstärke im Inneren einer Spule bezeichnet ist; w die Anzahl der Windungen der Spule und l die Länge der Spule bedeuten, während i den durch die Windungen der Spule fließenden elektrischen Strom angibt.

Eine entsprechende Wirkung auf ein von einer Spule erzeugtes Magnetfeld ergibt sich auch dann, wenn die Spule die Form einer Spiralfeder besitzt und die Verformung der Feder- bzw. Spulenwindungen eine Änderung im Durchmesser der Spiralfeder bzw. im Abstand der benachbarten Federwindungen voneinander bewirkt.

Ausführungsbeispiele sind in den Figuren schematisch dargestellt.

Es zeigen:

Fig. 1 ein erstes Ausführungsbeispiel
Fig. 2 dessen Kennlinie
Fig. 3 im Querschnitt einen Verbunddraht
Fig. 4 im Querschnitt einen Spulendraht
Fig. 5 ein weiteres Ausführungsbeispiel mit einer Festspule
Fig. 6, 7 dessen Kennlinien
Fig. 8, 9 ein weiteres Ausführungsbeispiel mit einer Spiralfeder
Fig. 10 ein weiteres Ausführungsbeispiel mit einer Kegelfeder

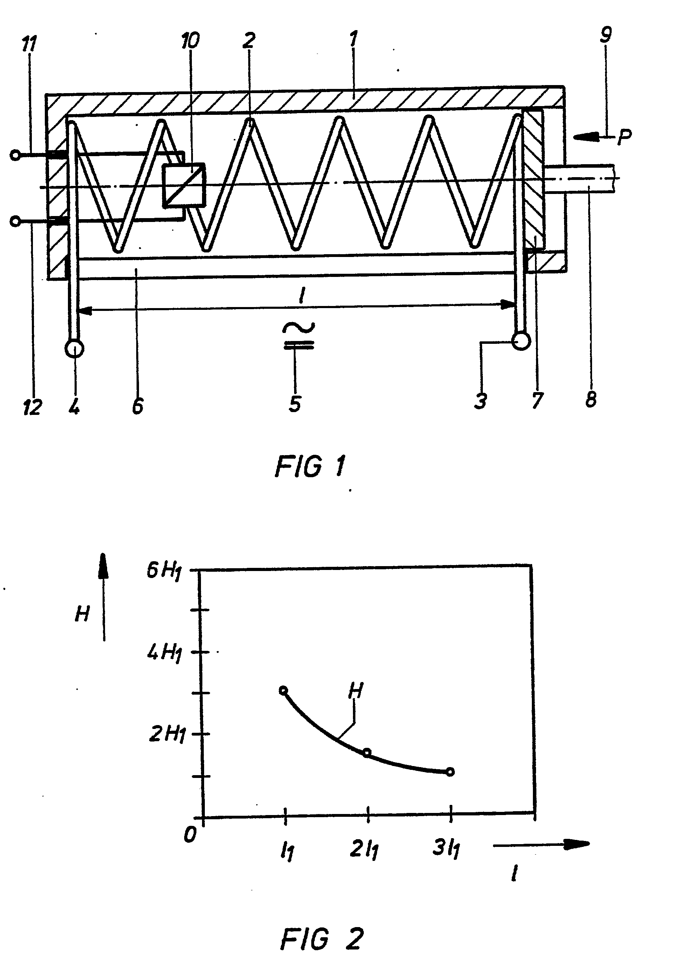

Innerhalb einer Hülse 1 befindet sich gemäß Figur 1 eine Federspule 2, deren Windungen aus elektrisch leitfähigem und elastisch verformbarem Material bestehen und deren Anschlüsse 3 und 4 mit einer Gleich- oder Wechselspannungsquelle verbunden sind, die in Figur 1 durch Zeichen 5 symbolisiert ist. Im unteren Teil der Hülse 1 befindet sich ein Längsschlitz 6, durch den die Anschlüsse 3 und 4 der Federspule 2 hindurchragen. Innerhalb der Hülse 1 ist horizontal beweglich eine Scheibe 7 vorgesehen. Diese ist mit einer Stange 8 verbunden, über die eine Kraft P in Richtung des Pfeiles 9 auf die Scheibe 7 ausgeübt werden kann. Durch die Kraft P läßt sich die Federspule 2 zusammendrücken, wobei der Anschluß 3 der Federspule innerhalb des Längsschlitzes 6 nach links verschoben wird und sich die Länge l der Federspule verringert.

Innerhalb der Federspule 2 ist ferner ein Magnetfeldsensor 10 angeordnet. Als Beispiel ist ein magnetfeldabhängiger Widerstand vorgesehen, der über die Leitungen 11 und 12 von einem Steuerstrom versorgt wird. Die Leitungen 11 und 12 sind - wie in Figur 1 nicht mehr dargestellt ist - in bekannter Weise an eine Auswerteschaltung zur Ermittlung des Magnetfeldes angeschlossen.

Anstelle einer Feldplatte bzw. eines magnetfeldabhängigen Widerstandes läßt sich auch jeder andere Magnetfeldsensor, z.B. ein Hallgenerator oder eine mit einem aus kristallinen oder amorphem Material bestehenden weichmagnetischen Kern versehene Spule verwenden. Wesentlich ist, daß der Magnetfeldsensor die Stärke des Magnetfeldes erfassen oder eine Änderung dieses Magnetfeldes bemerken kann.

Diese Änderung des Magnetfeldes ergibt sich bei Bewegung der Scheibe 7, da sich bei unverändertem Strom in der Federspule 2 die Windungszahl pro Längeneinheit erhöht, wenn die Federspule 2 zusammengedrückt wird.

Figur 2 zeigt als Beispiel die Kennlinie einer Federspule. Hier ist auf der Ordinate das magnetische Feld H und auf der Abszisse die Länge l der Federspule 2 aufgetragen. Hierbei wurde angenommen, daß in dem in Figur 1 dargestellten Ausgangszustand die Länge 1 dem Wert $3l_1$ entspricht und das vom Magnetfeldsensor 10 erfaßte Magnetfeld den Wert $H_1$ aufweist. Man sieht, daß beim Zusammendrücken der Federspule 2 auf ein Drittel ihrer ursprünglichen Länge sich das erfaßte Magnetfeld etwa verdreifacht.

Die Änderung des Magnetfeldes wird also durch Verformung der Federspule 2 bewirkt. Da diese sich mechanisch wie eine Feder verhält, ist hierzu sowohl eine Kraft als auch eine Bewegung notwendig. Die elektromagnetische Anordnung kann daher sowohl als Weg- als auch als Kraftsensor eingesetzt werden. Da das gemessene Magnetfeld neben dieser Bewegung auch von Strom in der Federspule 2 abhängt, läßt sich über den in der Federspule fließenden Strom der Weg- oder Kraftsensor justieren. Falls mit dem Magnetfeldsensor 10 ein Grenzwert des Magnetfeldes überwacht wird, kann also dieser Grenzwert (Stellung der Scheibe 7) durch Änderung des Stromes in der Federspule 2 beeinflußt werden. In Verbindung mit einer progressiv wirkenden Feder und einer Stromversorgung mit unterschiedlichen Stromstärken läßt sich mit ein- und derselben Anordnung beispielsweise ein Endschalter realisieren, der auf unterschiedliche Wege oder Kräfte anspricht.

Sind die Kräfte sehr hoch oder wünscht man unterschiedliche Windungszahlen zwischen Spule und Feder, so kann man die elektrischen und mechanischen Eigenschaften der Federspule 2 durch Anwendung eines Verbundwerkstoffes als Material für die Federspule unabhängig voneinander einstellen.

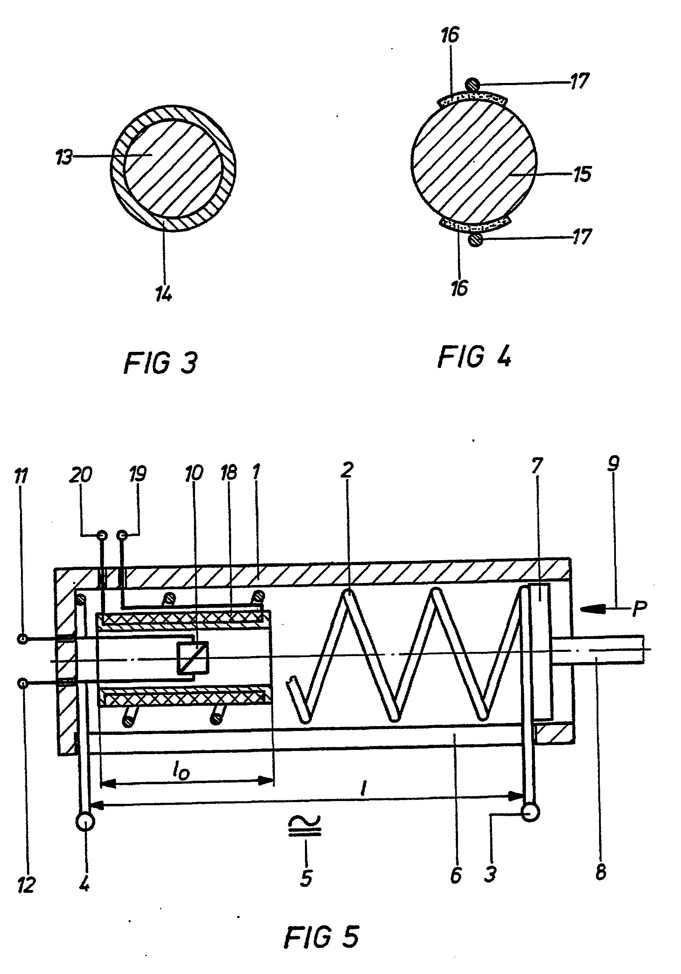

Figur 3 zeigt im Querschnitt einen Verbunddraht für eine Federspule, bei dem der innere Teil 13 des Querschnittes beispielsweise aus Federstahl und der äußere Teil 14 aus Kupfer besteht. Beide Teile können auch durch eine elektrisch isolierende Schicht voneinander getrennt sein.

Figur 4 zeigt den Querschnitt durch einen Spulendraht, bei dem die Federspule aus einem Stahldraht 15 besteht, wobei auf diesen Stahldraht an zwei gegenüberliegenden Enden Isolierschichten 16 aufgebracht und auf diese Isolierschichten elektrisch leitende Drähte 17 geklebt sind. Diese Drähte 17 bilden die Windungen der Federspule 2. Für den Fall, daß sie hintereinander geschaltet sind, läßt man - abhängig von der Zahl der aufgeklebten Drähte - die Windungszahl der Spule auf ein Vielfaches der Windungszahl der Feder einstellen. Für den Fall, daß ein geringerer Einfluß der Verformung auf das Magnetfeld angestrebt wird, kann man zusätzlich eine Festspule mit gegeneinander fixierten Windungen vorsehen. Eine derartige Anordnung zeigt Figur 5. Hier ist in der Hülse 1 und innerhalb eines Teilstückes der Federspule 2 eine Festspule 18 mit konstanter Länge $l_0$ und mit den Anschlüssen 19 und 20 angeordnet.

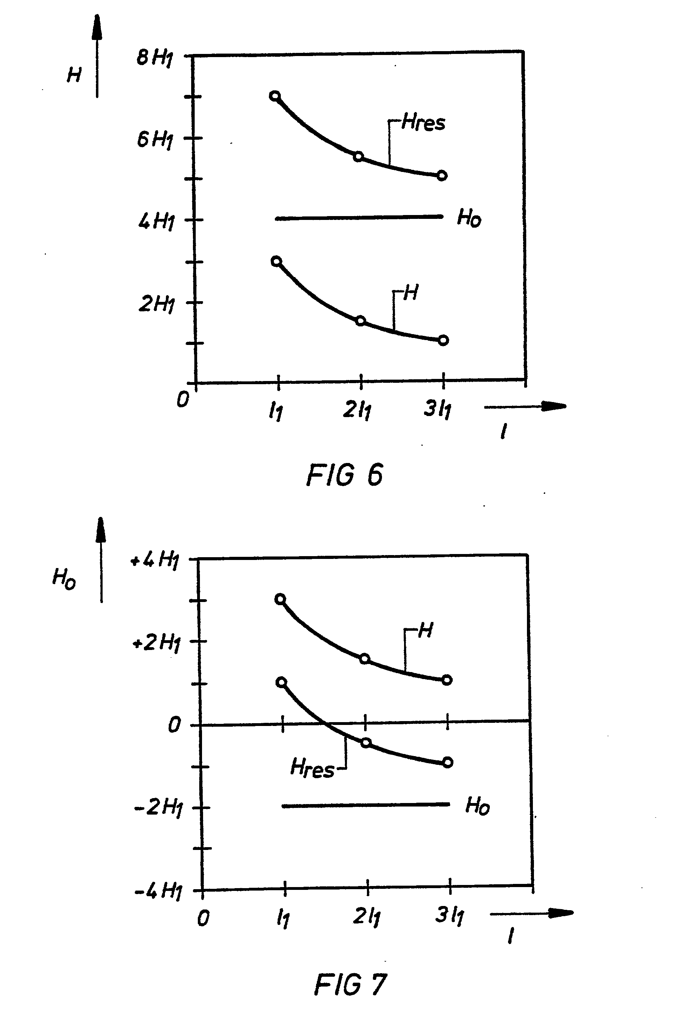

Figur 6 zeigt den Verlauf der Feldstärke H in gleicher Weise wie Figur 2. Die Feldstärke $H_0$ kennzeichnet die Feldstärke, die durch den Strom in der Festspule 18 erzeugt wird. Bei entsprechend gewählter Stromrichtung in den Windungen der Federspule 2 und der Festspule 18 addieren sich die Felder und es entsteht ein resultierendes Feld $H_{res}$, das bei der Länge $3l_1$ dem 5-fachen und bei der Länge $l_1$ - also bei zusammengedrückter Feder - auf den siebenfachen Wert von $H_1$ ansteigt. Falls man in den Windungen beider Spulen den gleichen Strom fließen lassen möchte, lassen sich diese elektrisch hintereinanderschalten.

In Figur 7 ist der Verlauf der Feldstärke bei einer Anordnung nach Figur 5 für den Fall dargestellt, daß die durch die Ströme in der Federspule 2 und in der Festspule 18 erzeugten Magnetfelder gegenläufig sind. Wie aus der Kurve $H_{res}$ erkennbar ist, wird sich in diesem Fall das Magnetfeld von $-H_1$ bis $+H_1$ verändern lassen. Es kann also auch eine Umkehr der Richtung des Magnetfeldes durch Bewegung der Scheibe 7 erzeugt werden.

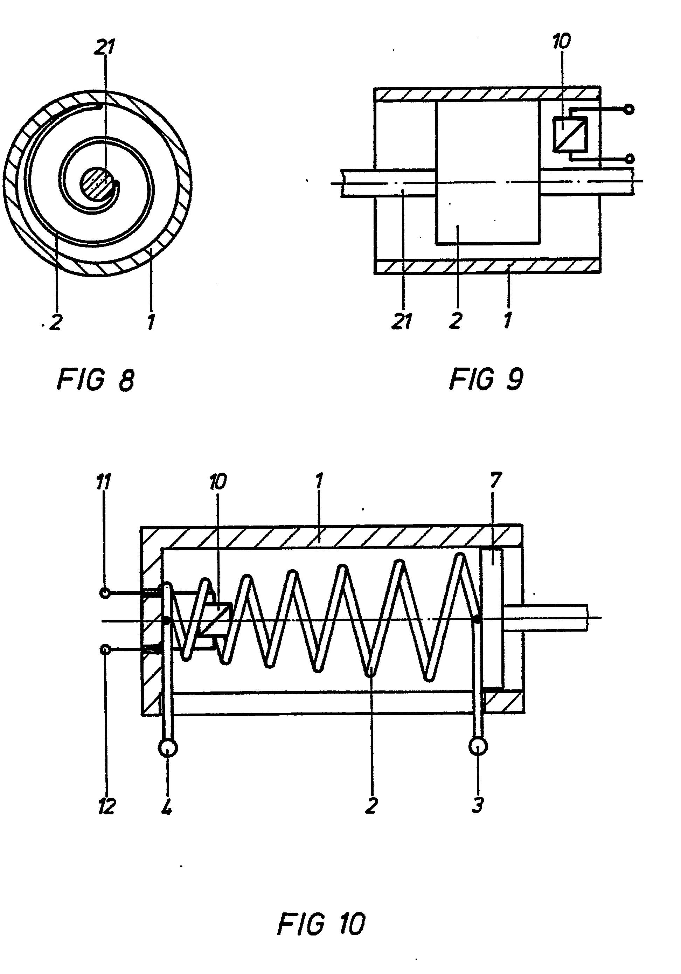

Während in den bisherigen Ausführungsbeispielen die Windungen der Federspule 2 an eine Schraubenfeder gekoppelt waren, zeigt die in den Figuren 8 und 9 schematisch dargestellte Anordnung, daß als Federspule 2 in einer Hülse 1 auch eine Spiralfeder fungieren kann. Anstelle der Linearbewegung der Scheibe 7 wird hier die Verformung der Federspule durch Drehung einer Welle 21 bewirkt. Der Magnetfeldsensor 10 ist achsial neben der Federspule angeordnet, wie insbesondere aus Figur 9 ersichtlich ist. Die elektrischen Anschlüsse der Federspule 2 sind in diesem Ausführungsbeispiel nicht eingezeichnet.

Figur 10 zeigt eine Anordnung ebenfalls mit Hülse 1 und Federspule 2, Magnetfeldsensor 10 und horizontal bewegbarer Scheibe 7, bei der die Windungen der Federspule 2 keine Schraubenfeder, sondern eine Kegelfeder darstellen, so daß die Scheibe 7 bis fast an den Magnetfeldsensor 10 verschoben werden kann.

Zur Anwendung als Sensorelement, beispielsweise für einen Stromgrenzwertgeber, läßt sich als Magnetfeldsensor 10 ein von einer Sensorspule 22 umgebener Impulsdraht 23 verwenden. Ein derartiger Impulsdraht besteht beispielsweise aus magnetisch halbhartem Material und hat die Eigenschaft, sich bei Überschreiten bzw. Unterschreiten einer gegebenen Feldstärke umzumagnetisieren. Dies geschieht unabhängig von der Geschwindigkeit, mit der sich die magnetische Feldstärke ändert, so daß in der Sensorspule 22 immer dann ein Spannungsimpuls induziert wird, wenn eine bestimmte Feldstärke über- bzw. unterschritten wird.

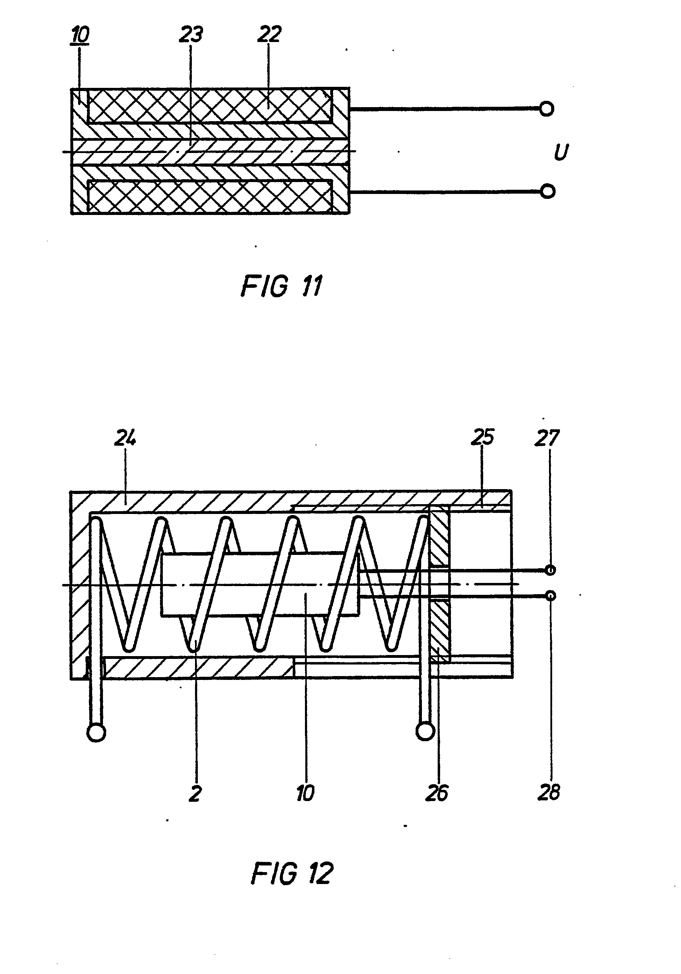

Verwendet man einen derartigen Magnetfeldsensor mit einem Impulsdraht, so läßt sich ein leicht justierbarer Stromgrenzwertgeber verwirklichen. Dieser ist im Prinzip in Figur 12 dargestellt. In eine Schraubhülse 24 mit einem Innengewinde 25 läßt sich eine Justierschraube 26 einschrauben, die ihrerseits an der äußersten rechten Windung der Federspule 2 anliegt. Der Magnetfeldsensor 10, der in diesem Fall aus Sensorspule 22 mit innen angeordnetem Impulsdraht 23 besteht, wird an seinen Anschlüssen 27 und 28 einen Spannungsimpuls abgeben, wenn in der Federspule 2 ein bestimmter Strom über- bzw. unterschritten wird.

Beispielsweise kann die Federspule 2 im Beispiel nach Figur 12 von einem Wechselstrom durchflossen werden. In diesem Fall entstehen an den Anschlüssen 27 und 28 Spannungsimpulse, wenn die Amplitude des Wechselmagnetfeldes einen Mindestwert erreicht oder überschreitet. Im Gegensatz zu herkömmlichen Stromgrenzwertgebern besteht hier die Möglichkeit, durch einfaches Drehen der Justierschraube 26 die Länge der Spule 2 zu beeinflussen und damit den Ansprechstrom des Magnetfeldsensors einzustellen.

**Patentansprüche**

1. Elektromagnetische Anordnung mit einem durch eine mechanische Bewegung beeinflußbaren und von einem Magnetfeldsensor erfaßbaren Magnetfeld sowie einer Spule mit elektrisch leitenden Windungen, **dadurch gekennzeichnet,** daß mindestens ein Teil der Windungen der Spule als Federspule (2) mit elastisch verformbaren und elektrisch leitenden Windungen ausgebildet ist, daß die Federspule (2) an eine Gleich- oder Wechselstromquelle zur Erzeugung des Magnetfeldes angeschlossen ist, daß der Magnetfeldsensor (10) innerhalb des durch den Strom in der Federspule (2) erzeugten Magnetfeldes angeordnet ist und daß ein bewegbares Teil (Scheibe 7, Welle 21, Justierschraube 26) so mit der Federspule (2) zusammenwirkt, daß dessen Bewegung eine Verformung der Federspule (2) bewirkt.

2. Elektromagnetische Anordnung nach Anspruch 1, **dadurch gekennzeichnet,** daß sich der Magnetfeldsensor (10) innerhalb einer Federspule (2) befindet, die ihrerseits in einer Hülse (1) gelagert ist und an einer achsial bewegbaren Scheibe (7) anliegt.

3. Elektromagnetische Anordnung nach Anspruch 2, **dadurch gekennzeichnet,** daß die Federspule (2) an eine Gleichstromquelle angeschlossen ist.

4. Elektromagnetische Anordnung nach Anspruch 2, **dadurch gekennzeichnet,** daß der Magnetfeldsensor (10) auf einen Grenzwert anspricht.

5. Elektromagnetische Anordnung nach Anspruch 2, **dadurch gekennzeichnet,** daß die Hülse (1) mit der Scheibe (7) als federnder Endschalter ausgebildet ist.

6. Elektromagnetische Anordnung nach Anspruch 1, **dadurch gekennzeichnet,** daß konzentrisch zur Federspule (2) eine Festspule (18) angeordnet ist.

7. Elektromagnetische Anordnung nach Anspruch 6, **dadurch gekennzeichnet,** daß die Festspule (18) von einem elektrischen Strom durchflossen wird, derart, daß sich die von den Strömen in der Federspule (2) und in der Festspule (18) erzeugten Magnetfelder addieren.

8. Elektromagnetische Anordnung nach Anspruch 6, **dadurch gekennzeichnet,** daß die Festspule (18) von einem elektrischen Strom durchflossen wird, derart, daß sich die von den Strömen in der Federspule (2) und in der Festspule (18) erzeugten Magnetfelder subtrahieren.

9. Elektromagnetische Anordnung nach Anspruch 1, **dadurch gekennzeichnet,** daß als Magnetfeldsensor (10) ein magnetfeldabhängiger Widerstand dient.

10. Elektromagnetische Anordnung nach Anspruch 1, **dadurch gekennzeichnet,** daß als Magnetfeldsensor (10) ein Hallgenerator vorgesehen ist.

11. Elektromagnetische Anordnung nach Anspruch 1, **dadurch gekennzeichnet,** daß als Magnetfeldsensor (10) ein Impulsdraht (23) dient, der von einer Sensorspule (22) umgeben ist.

12. Elektromagnetische Anordnung nach Anspruch 1, **dadurch gekennzeichnet,** daß sich die Federspule (2) in einer Schraubhülse (24) befindet und an einer Justierschraube (26) anliegt, so daß die Anordnung als Stromgrenzwertgeber einsetzbar ist.

13. Elektromagnetische Anordnung nach Anspruch 1, **dadurch gekennzeichnet,** daß die Windungen der Federspule (2) aus einem elektrisch leitenden und elastisch verformbaren Material bestehen.

14. Elektromagnetische Anordnung nach Anspruch 1, **dadurch gekennzeichnet,** daß die Windungen der Federspule (2) aus einem Verbundmaterial bestehen, wobei ein Teil (13) aus Federmaterial und der andere Teil (14) aus elektrisch gut leitfähigem Material besteht (Figur 3).

15. Elektromagnetische Anordnung nach Anspruch 1, **dadurch gekennzeichnet,** daß die Windungen der Federspule (2) aus den Windungen einer Feder bestehen und daß Drähte (17) über Isolierschichten (16) mit den Windungen der Feder verbunden sind (Figur 4).

16. Elektromagnetische Anordnung nach Anspruch 1, **dadurch gekennzeichnet,** daß als Federspule (2) eine Spiralfeder dient, die einerseits mit einer Hülse (1) und andererseits mit einer Welle (21) verbunden ist (Figur 8).

17. Elektromagnetische Anordnung nach Anspruch 1, **dadurch gekennzeichnet,** daß die Federspule (2) die Form einer kegelförmigen Feder aufweist.

## Revendications

1. Dispositif électromagnétique comportant un champ magnétique pouvant varier sous l'effet d'un déplacement mécanique et d'un capteur de champ magnétique ainsi qu'une bobine comportant des spires conductrices de l'électricité, caractérisé en ce qu'au moins une partie des spires de la bobine est formée d'une bobine à ressort (2) comprenant des spires conductrices de l'électricité déformables élastiquement, que la bobine (2) est reliée à une source de courant continu ou alternatif pour la production du champ magnétique, que le capteur de champ magnétique (10) est placé à l'intérieur du champ magnétique engendré par le courant dans la bobine (2), et qu'une partie déplaçable (disque 7, arbre 21, vis de réglage 26) coopère ainsi avec la bobine (2), que son déplacement provoque une déformation de la bobine (2).

2. Dispositif électromagnétique selon la revendication 1, caractérisé en ce que le capteur de champ magnétique (10) se trouve à l'intérieur d'une bobine (2) qui de son côté est supportée dans une douille (1) et s'appuie sur un disque (7) déplaçable axialement.

3. Dispositif électromagnétique selon la revendication 2, caractérisé en ce que la bobine élastique (2) est reliée à une source de courant continu.

4. Dispositif électromagnétique selon la revendication 2, caractérisé en ce que le capteur de champ magnétique (10) répond à une valeur limite.

5. Dispositif électromagnétique selon la revendication 2, caractérisé en ce que la douille (1) avec le disque (7) forment un interrupteur de fin de course faisant ressort.

6. Dispositif électromagnétique selon la revendication 1, caractérisé en ce que concentriquement à la bobine élastique (2) est disposée une bobine fixe (18).

7. Dispositif électromagnétique selon la revendication 6, caractérisé en ce que la bobine fixe (18) est traversée par un courant électrique, de telle sorte que les champs magnétiques engendrés dans la bobine (2) et la bobine fixe (18) s'additionnent.

8. Dispositif électromagnétique selon la revendication 6, caractérisé en ce que la bobine fixe (18) est traversée par un courant électrique, de telle sorte que les champs magnétiques engendrés dans la bobine (2) et la bobine fixe (18) se soustraient.

9. Dispositif électromagnétique selon la revendication 1, caractérisé en ce qu'une résistance variable en fonction du champ magnétique sert de capteur de champ magnétique (10).

10. Dispositif électromagnétique selon la revendication 1, caractérisé en ce qu'un générateur de Hall est prévu comme capteur de champ magnétique (10).

11. Dispositif électromagnétique selon la revendication 1, caractérisé en ce que comme capteur de champ magnétique (10), on utilise un câble d'impulsion qui est entouré d'une bobine de détection (22).

12. Dispositif électromagnétique selon la revendication 1, caractérisé en ce que la bobine élastique (2) se trouve dans une douille filetée (24) et s'appuie sur une vis de réglage (26), de sorte que le dispositif peut être utilisé comme un émetteur de valeur limite d'intensité.

13. Dispositif électromagnétique selon la revendication 1, caractérisé en ce que les spires de la bobine (2) sont constituées d'un matériau déformable élastiquement et conducteur de l'électricité.

14. Dispositif électromagnétique selon la revendication 1, caractérisé en ce que les spires de la bobine (2) sont constituées d'un matériau composite dont une partie (13) est un matériau élastique et l'autre partie (14) est constituée d'un matériau bon conducteur de l'électricité.

15. Dispositif électromagnétique selon la revendication 1, caractérisé en ce que les spires de la bobine (2) se composent des spires d'un ressort et que des câbles (17) sont liés par les couches isolantes (16) aux spires du ressort (figure 4).

16. Dispositif électromagnétique selon la revendication 1, caractérisé en ce qu'un ressort hélicoïdal sert de bobine hélicoïdale (2) qui d'un côté est relié à une douille (1) et de l'autre à un arbre (21) (figure 8).

17. Dispositif électromagnétique selon la revendication 1, caractérisé en ce que la bobine (2) présente la forme d'un ressort conique.

## Claims

1. An electromagnetic arrangement comprising a magnetic field which can be influenced by a mechanical movement and can be detected by a magnetic field sensor and comprising a coil composed of electrically conductive turns, characterised in that at least a part of the turns of the coil has the form of a spring coil (2) composed of elastically deformable and electrically conductive turns, that the spring coil (2) is connected to a d.c. – or a.c. – current source for the generation of the magnetic field, that the magnetic field sensor (10) is arranged inside the magnetic field generated by the current in the spring coil (2) and that a mobile component (plate 7, shaft 21, adjusting screw 26) cooperates with the spring coil (2) in such manner that its movement results in a deformation of the spring coil (2).

2. An electromagnetic arrangement as claimed in Claim 1, characterised in that the magnetic field sensor (10) is arranged inside a spring coil (2) which is itself mounted in a sleeve (1) and abuts against an axially movable plate (2).

3. An electromagnetic arrangement as claimed in Claim 2, characterised in that the spring coil (2) is connected to a d.c. source.

4. An electromagnetic arrangement as claimed in Claim 2, characterised in that the magnetic field sensor (10) responds to a limit value.

5. An electromagnetic arrangement as claimed in Claim 2, characterised in that the sleeve (1) with the plate (7) is designed as a spring-mounted terminal switch.

6. An electromagnetic arrangement as claimed in Claim 1, characterised in that a fixed coil (18) is arranged concentrically with the spring coil (2).

7. An electromagnetic arrangement as claimed in Claim 6, characterised in that the fixed coil (18) is traversed by an electric current in such manner that the magnetic field generated by the currents in the spring coil (2) and the fixed coil (18) are added to one another.

8. An electromagnetic arrangement as claimed in Claim 6, characterised in that the fixed coil (18) is traversed by an electric current in such manner that the magnetic fields generated by the currents in the spring coil (2) and the fixed coil (18) are subtracted from one another.

9. An electromagnetic arrangement as claimed in Claim 1, characterised in that a resistor dependent upon a magnetic field is used as magnetic sensor (10).

10. An electromagnetic arrangement as claimed in Claim 1, characterised in that a Hall generator is provided as magnetic field sensor (10).

11. An electromagnetic arrangement as claimed in Claim 1, characterised in that an impulse wire (23) surrounded by a sensor coil (22) serves as magnetic field sensor (10).

12. An electromagnetic arrangement as claimed in Claim 1, characterised in that the spring coil (2) is arranged in a sleeve (24) and abuts against an adjusting screw (26) in such manner that the arrangement can be used as a current limit value sensor.

13. An electromagnetic arrangement as claimed in Claim 1, characterised in that the turns of the spring coil (2) consist of an electrically conductive and elastically deformable material.

14. An electromagnetic arrangement as claimed in Claim 1, characterised in that the turns of the spring coil (2) consist of a compound material, one part (13) consisting of spring material and the other part (14) consisting of highly electrically conductive material (Figure 3).

15. An electromagnetic arrangement as claimed in Claim 1, characterised in that the turns of the spring coil (2) are formed by the turns of a spring and that wires (17) are connected to the turns of the spring via insulating layers (16) (Figure 4).

16. An electromagnetic arrangement as claimed in Claim 1, characterised in that the spring coil (2) has the form of a spiral spring which is connected on the one hand to a sleeve (1) and on the other hand to a shaft (21) (Figure 8).

17. An electromagnetic arrangement as claimed in Claim 1, characterised in that the spring coil (2) has the form of a conical spring.

FIG 1

FIG 2

FIG 3

FIG 4

FIG 5

FIG 6

FIG 7

FIG 8

FIG 9

FIG 10

FIG 11

FIG 12